(19)

Europäisches
Patentamt
European
Patent Office
Office européen
des brevets

(11)     **EP 2 878 616 A1**

(12)     **EUROPEAN PATENT APPLICATION**
published in accordance with Art. 153(4) EPC

(43) Date of publication:
**03.06.2015   Bulletin 2015/23**

(21) Application number: **13823842.3**

(22) Date of filing: **23.07.2013**

(51) Int Cl.:
*C08J 5/18* (2006.01)          *B32B 15/09* (2006.01)
*C08L 67/02* (2006.01)

(86) International application number:
**PCT/JP2013/069848**

(87) International publication number:
**WO 2014/017457 (30.01.2014 Gazette 2014/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority:   **24.07.2012   JP 2012163768**

(71) Applicant: **Unitika, Ltd.
Amagasaki-shi, Hyogo 660-0824 (JP)**

(72) Inventors:
• **NANJO, Kazunari
   Kyoto 611-0021 (JP)**
• **HAMADA, Toshiya
   Kyoto 611-0021 (JP)**
• **MATSUMOTO Masami
   Kyoto 611-0021 (JP)**

(74) Representative: **Vigand, Philippe et al
Novagraaf International SA
3 chemin de l'Echo
1213 Onex Geneva (CH)**

(54)     **POLYESTER FILM FOR COLD FORMING AND METHOD FOR PRODUCING SAME**

(57)     A polyester film for cold forming including polybutylene terephthalate (PBT) and polyethylene terephthalate (PET), wherein a mass ratio (PBT/PET) between PBT and PET is 30/70 to 80/20.

EP 2 878 616 A1

**Description**

Technical Field

The present invention relates to a polyester film adaptable to cold forming, for use in cold forming such as stretch forming or deep draw forming, and a method for producing the same.

Background Art

Metal cans have hitherto been used as the outer covers of lithium ion secondary batteries. However, in order to cope with the weight reduction and the diversification of the shapes of lithium ion secondary batteries, bags formed of laminates composed of metal foil such as aluminum foil and plastic film laminated thereon have come to be used for the outer covers of lithium ion secondary batteries. Such bags are required to have, as indispensable properties thereof, properties such as moisture proofness, sealability, puncture resistance, electric insulation, heat/cold resistance and formability, and hence the laminates are designed to have a structure composed of polyester film/polyamide film/metal foil/sealant film.

The corner portions of the lithium ion secondary batteries are required to be formed in sharp forms, in order to efficiently dispose the batteries together with printed circuit boards and other components, in the interior of electronic devices to be reduced in size and thickness. Accordingly, importance is attached to the development of polyamide film having excellent formability in cold forming such as stretch forming or deep draw forming, and Patent Literature 1 and Patent Literature 2 propose polyamide films having the impact strength of 30000 J/m or more, and smaller in directionality with respect to mechanical properties in such a way that the tensile strengths up to rupture in the four directions (0°, 45°, 90° and 135°) are 150 N/mm$^2$ or more, and the elongations in the four directions are 80% or more.

Citation List

Patent Literature

Patent Literature 1: JP2000-123800A
Patent Literature 2: JP2005-022336A

Summary of Invention

Technical Problem

However, such physical properties of polyamide film are attained by stretching polyamide resin substantially by an inflation method. Accordingly, a polyamide film stretched by a tenter method suitable for mass production cannot be used for this use, and a technique of cold forming a laminate obtained by laminating polyamide film has not been able to be widely used.

Polyamide film undergoes the decomposition of the amide group in the presence of an acid or an electrolyte, and tends to be degraded. Accordingly, in the case where the surface layer of the outer cover of a lithium ion secondary battery is a polyamide film, sometimes an electrolyte or an acidic substance spills out at the time of a liquid injection step and attaches to the polyamide film to break the film, and hence it is necessary to laminate a polyester film excellent in acid resistance or electrolyte resistance as the outermost layer of the outer cover of the lithium ion secondary battery.

The problem of the present invention is to solve the above-described problems, and to provide a polyester film excellent in formability in cold forming such as stretch forming or deep draw forming and capable of forming sharp forms. The problem of the present invention is also to allow, by using this film, a laminate having a structure composed of polyester film/metal foil/sealant film to be used for the outer cover of the lithium ion secondary battery.

Solution to Problem

The present inventors made a diligent study in order to solve the above-described problems, and consequently have reached the present invention by discovering that a polyester film including polybutylene terephthalate and polyethylene terephthalate in specific proportions is excellent in formability in cold forming such as stretch forming or deep draw forming, and is capable of forming a sharp form.

Specifically, the gist of the present invention is as follows.

(1) A polyester film for cold forming including polybutylene terephthalate (PBT) and polyethylene terephthalate (PET), wherein the mass ratio (PBT/PET) between PBT and PET is 30/70 to 80/20.

(2) The polyester film for cold forming according to (1), wherein after a heat treatment at 160°C for 15 minutes, the thermal shrinkage rate in the lengthwise direction (MD) and the thermal shrinkage rate in the widthwise direction (TD) are each 5 to 20%.

(3) The polyester film for cold forming according to (1), wherein polyethylene terephthalate (PET) includes isophthalic acid as an acid component in a content of 0 to 15 mol%.

(4) The polyester film for cold forming according to (1), wherein the transesterification index between polybutylene terephthalate (PBT) and polyethylene terephthalate (PET) is 1 to 10%.

(5) A method for producing the polyester film for cold forming according to any one of (1) to (4), wherein the polyester film is stretched in the lengthwise direction (MD) and the widthwise direction (TD), the area magnification factor (MD stretching magnification factor × TD stretching magnification factor) is set at 6 to 20, and the stretching magnification factor ratio (MD stretching magnification factor/TD stretching magnification factor) is set at 0.4 to 1.

(6) The method for producing the polyester film for cold forming, according to (5), wherein the polyester film is stretched with the MD stretching magnification factor set at 2 to 4 and the TD stretching magnification factor set at 3 to 5.

(7) A laminate film wherein on the polyester film for cold forming according to any one of (1) to (4), a metal foil and a sealant film are laminated in this order.

Advantageous Effects of Invention

According to the present invention, it is possible to provide a polyester film excellent in formability in cold forming such as stretch forming or deep draw forming, and capable of forming a sharp form. The polyester film of the present invention is satisfactory in the acid resistance against hydrofluoric acid or the resistance against an electrolyte, and hence, by using the polyester film, the laminate film having a structure composed of polyester film/metal foil/sealant film can be used for the outer cover of a lithium ion secondary battery.

Brief Description of Drawing

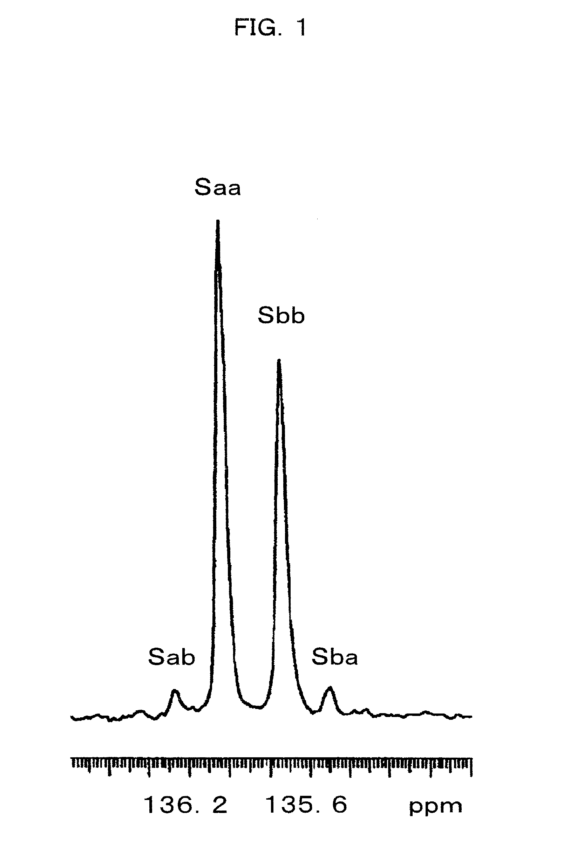

[FIG. 1] FIG. 1 shows the enlarged region of the peaks (Sab, Sba, Saa, Sbb) due to the transesterification in the NMR chart of the film of the present invention.

Description of Embodiments

Hereinafter, the present invention is described in detail.

The polyester film of the present invention includes polybutylene terephthalate (PBT) and polyethylene terephthalate (PET).

In the polybutylene terephthalate (PBT) in the present invention, the polymerization components are terephthalic acid and 1,4-butane diol, and other components may also be copolymerized.

The copolymerization components are not particularly limited. Examples of the acid component include: dicarboxylic acids such as isophthalic acid, phthalic acid, 2,6-naphthalene dicarboxylic acid, 5-sodiumsulfoisophthalic acid, oxalic acid, succinic acid, adipic acid, sebacic acid, azelaic acid, dodecanedioic acid, dimeric acid, maleic anhydride, maleic acid, fumaric acid, itaconic acid, citraconic acid, mesaconic acid and cyclohexanedicarboxylic acid; 4-hydroxybenzoic acid, ε-caprolactone and lactic acid.

Examples of the alcohol component include: ethylene glycol, diethylene glycol, 1,3-propane diol, neopentyl glycol, 1,6-hexane diol, cyclohexanedimethanol, triethylene glycol, polyethylene glycol, polypropylene glycol, polytetramethylene glycol, and ethylene oxide adducts of bisphenol A and bisphenol S.

Moreover, the following trifunctional compounds may also be used in small amounts: trimellitic acid, trimesic acid, pyromellitic acid, trimethylolpropane, glycerin and pentaerythritol.

These copolymerization components may be used in combinations of two or more thereof.

In the present invention, when a copolymer is used as polybutylene terephthalate (PBT), the type and the proportion of the copolymerizing component may be appropriately selected; the proportion of 1,4-butanediol is preferably 80 mol% or more and more preferably 90 mol% or more in relation to the whole alcohol components. When the proportion of 1,4-butanediol is less than 80 mol%, the melting point is sometimes lower than the below-described range, and consequently the crystallinity sometimes comes to be low to degrade the heat resistance.

In the polyester film of the present invention, the melting point derived from polybutylene terephthalate (PBT) is preferably 200 to 223°C and more preferably 210 to 223°C. When the melting point is lower than 200°C, the polybutylene terephthalate (PBT) is low in crystallinity, and consequently, the heat resistance of the film is degraded.

In the polyethylene terephthalate (PET) in the present invention, the polymerization components are terephthalic acid and ethylene glycol, and other components may also be copolymerized.

The copolymerization components are not particularly limited, and examples of the copolymerization components may include the foregoing components listed as examples for the above-described polybutylene terephthalate (PBT).

Because of the easiness in below-described regulation of the melting point, the acid component to be copolymerized is preferably isophthalic acid. The content of isophthalic acid in the polyethylene terephthalate (PET) is preferably 0 to 15 mol% and more preferably 0 to 12 mol%, in relation to the whole acid components.

In the polyester film of the present invention, the melting point derived from polyethylene terephthalate (PET) is preferably 230 to 256°C and more preferably 236 to 256°C. When the melting point is lower than 230°C, the polyethylene terephthalate (PET) is low in crystallinity, and consequently, the heat resistance of the film is degraded.

In the polyester film of the present invention, the mass ratio (PBT/PET) between polybutylene terephthalate (PBT) and polyethylene terephthalate (PET) is required to be 30/70 to 80/20, and is additionally, preferably 40/60 to 70/30 in order to sufficiently obtain the formability in cold forming.

When the proportion of polybutylene terephthalate (PBT) in the polyester film exceeds 80% by mass, the highly crystalline characteristic of polybutylene terephthalate (PBT) is remarkably developed, and consequently, in the laminate obtained by laminating a metal foil and a sealant film on the polyester film, the formability and the impact resistance are degraded, and the adhesiveness to the metal foil is also degraded. On the other hand, when the proportion of polybutylene terephthalate (PBT) is less than 30% by mass, the tensile strength is high and the formability of the laminate film is degraded.

In particular, when the proportion of polybutylene terephthalate (PBT) in the polyester film is 40 to 70% by mass, in the cold forming, the obtained laminate film is satisfactory in the forming process followability, undergoes no whitening phenomenon due to the occurrence of voids caused by the deformation of the film, undergoes no occurrence of microcracks, is excellent in the adhesiveness to the metal foil, and allows a large deformation to be performed without breaking the metal foil. Consequently, the laminate film is capable of being formed in a sharp form, and allows lithium ion secondary batteries high in degree of freedom of shape to be obtained.

The polybutylene terephthalate (PBT) as the material to be used for the production of the polyester film of the present invention preferably has a limiting viscosity of 0.75 to 1.6 dl/g, and the polybutylene terephthalate (PBT) as the material to be used for the same production as described above preferably has a limiting viscosity of 0.65 to 1.0 dl/g.

The limiting viscosity after melt-mixing of these is preferably 0.75 to 1.2 dl/g. When the limiting viscosity after the melt mixing is less than 0.75 dl/g, the obtained laminate film is broken at the time of cold forming and the productivity is sometimes extremely degraded. On the other hand, when the limiting viscosity after the melt mixing exceeds 1.2 dl/g, the load applied to the melt extruder in the production process of the film is large and the production speed is sometimes forced to be sacrificed, and alternatively, the melt residence time of the resin in the extruder is made too long to cause the reaction between the polyester resin molecules to proceed to an excessive extent, and hence the degradation of the properties of the film is caused, and consequently the physical properties of the laminate film are sometimes degraded. In the production of a material having a high limiting viscosity, the polymerization time or the polymerization process becomes relatively longer, and hence the material having a high limiting viscosity offers a factor to raise the cost.

The polymerization methods of polybutylene terephthalate (PBT) and polyethylene terephthalate (PET) as the materials are not particularly limited, and these polymers can be polymerized by, for example, a transesterification method or a direct polymerization method. Examples of the transesterification catalyst include the oxides and acetates of Mg, Mn, Zn, Ca, Li and Ti. Examples of the polycondensation catalyst include the oxides and acetates of Sb, Ti and Ge.

The polyester after polymerization includes, for example, monomers, oligomers and by-products of acetaldehyde or tetrahydrofuran, and hence the polyester is preferably obtained by solid phase polymerization at a temperature of 200°C or higher under reduced pressure or in a flow of an inert gas.

In the polymerization of polybutylene terephthalate (PBT) or polyethylene terephthalate (PET), additives such as an antioxidant, a heat stabilizer, an ultraviolet absorber and an antistatic agent can be added if necessary. Examples of the antioxidant may include hindered phenolic compounds and hindered amine-based compounds; examples of the heat stabilizer may include phosphorus compounds; and examples of the ultraviolet absorber may include benzophenone compounds and benzotriazole compounds. As the reaction inhibitor between polybutylene terephthalate (PBT) and polyethylene terephthalate (PET), a phosphorus compound having hitherto been known is preferably added before, during and after the polymerization.

In the polyester film of the present invention, after a treatment at 160°C for 15 minutes, the thermal shrinkage rates in the film lengthwise direction (MD) and in the film widthwise direction (TD), namely, the MD thermal shrinkage rate and the TD thermal shrinkage rate are each preferably 5 to 20% and more preferably 5 to 15%.

When the thermal shrinkage rate of the polyester film is less than 5%, the obtained laminate film is sometimes poor in the adhesiveness to the metal foil. On the other hand, when the thermal shrinkage rate exceeds 20%, shrinkage wrinkles sometimes occur during the lamination, or the obtained laminate film sometimes undergoes curling.

The thermal shrinkage rate of the polyester film can be regulated by changing the heat-fixing temperature at the time of stretched step. By setting the heat-fixing temperature at a higher temperature, the polyester film is made higher in crystallinity and the thermal shrinkage rate can be made lower. By setting the heat-fixing temperature at a lower temperature, the polyester film is made lower in crystallinity and the thermal shrinkage rate can be made higher.

In the polyester film of the present invention, the transesterification index between polybutylene terephthalate (PBT) and polyethylene terephthalate (PET) is preferably 1 to 10% and more preferably 3 to 7%. The laminate film using a polyester film having a transesterification index falling within the above-described range has a satisfactory deformation followability in cold forming, does not adhere to a processing jig for cold forming and is low in friction; thus, the obtained formed body is improved in the uniformity of the surface thereof, and reduced in the breakage of the metal foil in the course of cold forming.

Examples of the method for regulating the transesterification index so as to fall within the above-described range include, without being particularly limited to; the methods in which the melting temperature, the kneading degree in an extruder and the residence time in an extruder of polybutylene terephthalate (PBT) and polyethylene terephthalate (PET) are regulated. Examples of the melt mixing method include, without being particularly limited to: a method in which blended material chips are mixed and melted in the same extruder as used for blending; and a method in which materials are separately melted in different extruders, and then the molten materials are mixed. Of these two methods, the latter method is preferable from the viewpoint of the control of the transesterification reaction.

The transesterification index is significantly affected by the type, the amount and the residual activity of the polymerization catalyst of the polyester. Accordingly, the techniques involving the selection of the catalyst, the proper control of the amount of the catalyst and the addition of the catalyst activity inhibitor may also be used in combination.

The following method is presented as the method for producing the polyester film of the present invention.

Specifically, polybutylene terephthalate (PBT) and polyethylene terephthalate (PET) are blended with each other so as for the mass ratio (PBT/PET) to be 30/70 to 80/20, melt mixed in an extruder at an intra-extruder temperature of 250 to 280°C with a residence time of 3 to 15 minutes, and then extruded through a T-die into a sheet shape. The sheet is cooled by allowing the sheet to adhere to a cooling drum temperature regulated at room to yield an unstretched film.

The obtained unstretched film is introduced into a simultaneous biaxial stretching machine, and simultaneously biaxially stretched at a temperature of 50 to 150°C in the lengthwise direction (MD) and the widthwise direction (TD).

In the biaxial stretching, the area magnification factor (MD stretching magnification factor × TD stretching magnification factor) is preferably 6 to 20 and more preferably 8.75 to 15.75. When the area magnification factor exceeds 20, the orientation in the film plane proceeds to make higher the crystallization, and hence the obtained laminate film cannot acquire formability in cold forming, and undergoes the occurrence of cracks or delamination. On the other hand, when the area magnification factor is less than 6, the film suffers from insufficient strength, and consequently the obtained laminate film undergoes the occurrence of cracks in cold forming.

The stretching magnification factor ratio (MD stretching magnification factor/TD stretching magnification factor) is preferably 0.4 to 1 and more preferably 0.55 to 1. When the stretching magnification factor ratio falls outside the above-described range, the film undergoes the occurrence of weak orientation and strong orientation in MD and TD in the film plane in a manner poor in the orientation balance, and hence the obtained laminate film disadvantageously tends to undergo in cold forming the occurrence of cracks and wrinkles in the weakly oriented direction.

In order to obtain the above-described area magnification factor and the stretching magnification factor ratio, as the stretching magnification factors in the respective directions, the MD stretching magnification factor is preferably 2 to 4 and more preferably 2.5 to 3.5, and the TD stretching magnification factor is preferably 3 to 5 and more preferably 3.5 to 4.5.

After the simultaneous biaxial stretching, the film is preferably heat fixed with the relaxation rate in TD set at 3.0 to 7.0%. The heat-fixing temperature is preferably 140 to 185°C and more preferably 155 to 180°C.

The unstretched film may be subjected to a preliminary stretching with a magnification factor of about 1.2 before being introduced into the simultaneous biaxial stretching machine.

The polyester film of the present invention may also be produced by a successive biaxial stretching method.

In the successive biaxial stretching method, an unstretched film obtained in the same manner as described above is heated with, for example, a roll or an infrared ray, and stretched by taking advantage of the circumferential speed difference of two or more rolls, at 50 to 150°C, in the lengthwise direction (MD) to yield a longitudinally stretched film. In the longitudinal stretching, the MD stretching magnification factor is preferably 2 to 4 and more preferably 2.5 to 3.5.

The obtained longitudinally stretched film is successively and continuously stretched in the widthwise direction (TD) to produce a biaxially oriented film. The widthwise direction (TD) stretching is started at 50 to 150°C, and the TD stretching magnification factor is preferably 3 to 5 and more preferably 3.5 to 4.5.

Even in the case where the successive biaxial stretching is adopted, because of the same reasons as in the above-described case where the simultaneous biaxial stretching is adopted, the area magnification factor (MD stretching magnification factor × TD stretching magnification factor) is preferably 6 to 20 and more preferably 8.75 to 15.75, and the stretching magnification factor ratio (MD stretching magnification factor/TD stretching magnification factor) is preferably 0.4 to 1, more preferably 0.55 to 1 and particularly preferably 0.75 to 0.85.

After the successive biaxial stretching, the film is preferably heat fixed with the relaxation rate in TD set at 3.0 to 7.0%. The heat-fixing temperature is preferably 140 to 185°C and more preferably 155 to 180°C.

The heat-fixing treatment after the simultaneous biaxial stretching or the successive biaxial stretching is an important step for imparting the dimensional stability to the film. As the method for that purpose, for example, the following heretofore known methods can be used: a method in which hot air is blown, a method in which irradiation with infrared ray is performed, and a method in which irradiation with microwave is performed. Among these methods, the method in which hot air is blown is most appropriate because of being capable of heating uniformly and accurately.

In order to improve the process passing property at the time of the production of the polyester film of the present invention and at the time of cold forming of the obtained laminate film, it is preferable to form a film by adding to polyester, which is a material, a small amount of an inorganic lubricant such as silica, alumina or kaolin to impart slipping property to the surface of the polyester film. The content of the inorganic lubricant in the polyester film is preferably 0.001 to 0.5% by mass and more preferably 0.05 to 0.3% by mass.

Additionally, the polyester film may include, for example, a silicone compound in order to improve the exterior appearance or printability.

The polyester film of the present invention preferably includes, in the polyester forming the film, a low molecular weight polyethylene incompatible with the polyester forming the film, in a content of 2000 to 6000 ppm. When the content of the low molecular weight polyethylene is less than 2000 ppm, the slippage improvement effect is not sufficient, and on the other hand, when the content of the low molecular weight polyethylene exceeds 6000 ppm, the slippage of the film surface becomes excessive in quality, and additionally, the content of the incompatible resin is increased and hence the polyester film sometimes becomes fragile.

In the present invention, the low molecular weight polyethylene has a number average molecular weight of preferably 1000 to 8000 and more preferably 2000 to 6000. By including the low molecular weight polyethylene having a molecular weight falling within the above-described range in the incompatible polyester, the film surface can be roughened to improve the slippage, and also in the obtained laminate film, the roughened film surface can be maintained. When the number average molecular weight of the low molecular weight polyethylene is less than 1000, the molecular weight is too low, thus the low molecular weight polyethylene is deposited on and exfoliated from the film surface at the time of the film processing or at the time of the film lamination, and sometimes stains the jig or scratches the film itself in the cold forming step. On the other hand, when the number average molecular weight of the low molecular weight polyethylene exceeds 8000, the effect of roughening the surface in the laminate film to be obtained is not sufficient, and the slippage at the time of cold forming is poor.

The method for adding the low molecular weight polyethylene to polybutylene terephthalate (PBT) or polyethylene terephthalate (PET) is preferably, without being particularly limited to, a method in which in polybutylene terephthalate (PBT), polyethylene terephthalate (PET), or a mixture of these, a master chip containing the low molecular weight polyethylene in a content of 0.5 to 5% by mass having been prepared beforehand is added.

The laminate film of the present invention is a laminate in which on the polyester film of the present invention, a metal foil and a sealant film are laminated in this order.

Examples of the metal foil include aluminum foil, copper foil, tin foil, gold foil, silver foil, zinc foil, brass foil, nickel foil, stainless steel foil, iron foil and titanium foil.

The metal foil may be a metal foil having been subjected to a chemical conversion treatment such as a chromic acid treatment, a phosphoric acid treatment, an electrolytic chromic acid treatment or a chromate treatment; or a plating treatment with nickel, tin, zinc, aluminum, gunmetal, bronze, or any other metal.

The thickness of the metal foil is preferably 9 to 60 $\mu$m and more preferably 20 to 50 $\mu$m. When the thickness of the metal foil is less than 9 $\mu$m, the probability of the presence of pinholes in the metal foil is high, and the use of a laminate film having this metal foil as the outer cover of a lithium ion secondary battery results in a high fraction defective. On the other hand, when the thickness exceeds 60$\mu$m, the stress at the time of cold forming becomes high, and the breakage of the metal foil or the breakage of the polyester film tends to occur in the laminate film.

Examples of the method for laminating the polyester film on a metal foil include a method in which the lamination is performed through the intermediary of an adhesive layer.

Examples of the resin as the adhesive include, without being particularly limited to: the adhesives using as the main component a polyester resin, an epoxy resin, a polyurethane resin or a polyester-epoxy copolymer resin, and using as a curing agent one or two or more of a melamine resin, an isocyanate resin, an oxazoline resin and phenol resin. The adhesive layer formed of such an adhesive as described above is suitable for cold forming processing.

The adhesive layer can be provided by a coextrusion method, a laminate processing or a coating processing.

The thickness of the adhesive layer is preferably 0.5 to 5.0 $\mu$m. In the case where the thickness of the adhesive layer is less than 0.5 $\mu$m, the adhesive force is insufficient, and in the case where the thickness of the adhesive layer exceeds 5.0 $\mu$m, the adhesiveness, the processability and the cohesive force after the processing of the adhesive are degraded; thus, in both cases, the obtained laminate film may possibly undergo delamination of the film midway through the forming.

The laminate film of the present invention is a laminate in which a sealant film is further laminated on the metal foil laminated on the polyester film. The inclusion of the sealant film allows the laminate film to be seal-processed into a bag.

The sealant film is preferably an unstretched film formed of, for example, polyethylene, polypropylene, maleic acid-modified polypropylene, maleic acid-modified polyethylene, ethylene-acrylate copolymer, an ionomer resin or polyvinyl chloride, because of being excellent in sealability or chemical resistance.

Examples of the method for laminating the sealant film on the metal foil include a method similar to the above-described method for laminating the polyester film on the metal foil.

Examples

Hereinafter, the present invention is described in more detail by way of Examples. However, the present invention is not limited by the following Examples at all.

For the production of the polyester film, the following resins were used.

PBT-1: PBT obtained by applying solid phase polymerization, limiting viscosity: 1.08 dl/g, Tm: 223°C, content of Ti catalyst: 40 ppm
PET-1: PET obtained by applying solid phase polymerization, limiting viscosity: 0.75 dl/g, Tm: 255°C, content of Ge catalyst: 40 ppm
PET-2: Copolymerized PET with 6 mol% of isophthalic acid, obtained by applying solid phase polymerization, limiting viscosity 0.75 dl/g, Tm: 233°C, content of Ge catalyst: 40 ppm
PET-3: Copolymerized PET with 15 mol% of isophthalic acid, obtained by applying solid phase polymerization, limiting viscosity: 0.75 dl/g, Tm: 215°C, content of Ge catalyst: 40ppm

The properties of the material resins, polyester films and laminate films were measured or evaluated by the following methods.

A. Limiting Viscosity of Resin

In 50 ml of a mixed solvent of phenol/tetrachloroethane = 5/5 (by mass), 0.25 g of a resin was dissolved, and the limiting viscosity was measured at 25°C with an Ubbelohde viscometer tube.

B. Melting Points (Tms) of Resin and Polyester Film

The entitled melting points were measured with the DSC manufactured by Perkin-Elmer Corp., as the melting points in the course of the temperature increase at 20°C/min.

As the measurement sample of a polyester film, a sample in an amorphous state prepared by melting the film and then rapidly cooling the molten film at a rate of 100°C/min was used. In each of Examples and Comparative Examples, two melting points were observed; the lower melting point (Tm1) was taken as derived from polybutylene terephthalate (PBT) and the higher melting point (Tm2) was taken as derived from polyethylene terephthalate (PET).

C. Thermal Shrinkage Rate of Polyester Film

As the specimens for the measurement of the thermal shrinkage rate in the lengthwise direction (MD) of a film, five specimens were prepared each of which was prepared as follows: a polyester film was cut to 10 mm in TD × 150 mm in MD and the resulting piece of the film was marked with two gauge lines so as to be separated from each other by 100 mm.

Similarly, as the specimens for the measurement of the thermal shrinkage rate in the widthwise direction (TD) of a film, five specimens were prepared each of which was prepared as follows: a polyester film was cut to 10 mm in MD × 150 mm in TD and the resulting piece of the film was marked with two gauge lines so as to be separated from each other by 100 mm.

The obtained specimens were heat treated in an oven set at 160°C under no load for 15 minutes, then the specimens were taken out and cooled back to room temperature, and then the distance between the gauge lines in each of the specimens was measured. The thermal shrinkage rate was obtained for each of the specimens according to the following formula. Each of the MD thermal shrinkage rate and the TD thermal shrinkage rate was the value averaged over the five corresponding specimens.

$$Thermal\ shrinkage\ rate\ (\%) = (A - B)/A \times 100$$

A: The distance (mm) between the gauge lines before the heat treatment; B: The distance (mm) between the gauge lines after the heat treatment

D. Transesterification Index (Ex)

$^{13}$C-NMR measurements were performed by using the GEMINI 2000/300 nuclear magnetic resonance spectrometer (magnetic field strength: 7.05 T) manufactured by Varian, Inc. As a measurement sample, a solution prepared by dissolving 60 to 100 mg of a film in 0.7 ml of a solvent $CF_3COOD$ was used; the transesterification index (Ex) was determined according to the following formula from the integrated values of the peaks (FIG. 1) due to the transesterification.

$$Ex(\%) = (Sab + Sba)/(Saa + Sbb + Sab + Sba)\times100$$

E. Resistance against Electrolyte and Acid Resistance against Hydrofluoric Acid of Polyester Film

On the surface of a polyester film, an electrolyte (prepared by dissolving lithium tetrafluoroborate in a mixed ethylene carbonate/diethyl carbonate (mass ratio 1/1) solvent in a concentration of 1 mol/L) and hydrofluoric acid (47%) were placed separately each as a drop, and the surface state of the film portion in touch with each of the drops was observed. The resistance against the electrolyte and the acid resistance against hydrofluoric acid were evaluated as follows. The case where a hole was not formed in 10 minutes after the placement of the drop was evaluated as G(Good), and the case where a hole was formed in 10 minutes after the placement of the drop was evaluated as P(Poor).

F. Formability of Laminate Film

The formability of a laminate film was evaluated with 1-ton desktop servo press (SBN-1000, manufactured by Yamaoka Seisakusho Co., Ltd.) by using a forming die of 115 mm× 115 mm× and 6mm in depth, wherein the laminate film was subjected to cold forming from the sealant film (unstretched polypropylene film) side.
The laminate film after the forming was evaluated as follows: the case where cracks and delamination did not occur, and the exterior appearance was free from, for example, wrinkles and film whitening to be satisfactory was evaluated as E(Excellent); the case where cracks and delamination did not occur was evaluated as G(Good); the case where cracks not penetrating through the aluminum foil occurred, but no delamination occurred was evaluated as A(Average); and the case where cracks penetrating through the aluminum foil occurred or delamination occurred was evaluated as P(Poor).

Example 1

To 60 parts by mass of polybutylene terephthalate (PBT-1) and 40 parts by mass of polyethylene terephthalate (PET-1), coagulated silica having an average particle size of 2.5 $\mu$m was added so as for the content thereof to be 0.08% by mass; the resulting mixture was melted at a temperature of 275°C, extruded from a T-die outlet with a residence time of 5 minutes, and rapidly cooled for solidification to yield an unstretched film.
Next, the unstretched film was stretched by using a tenter-type successive stretching machine. First, the unstretched film was roll-heated with a longitudinal stretching machine to be stretched with a magnification of 3.39 in MD, and successively underwent the start of a transverse stretching at 80°C to be stretched with a magnification of 3.84 in TD. In the stretching thus performed, the area magnification factor (MD stretching magnification factor ×TD stretching magnification factor) was 13, and the stretching magnification factor ratio (MD stretching magnification factor/TD stretching magnification factor) was 0.88.
The stretched film was heat treated for 4 seconds at a heat-fixing temperature set at 167°C and a TD relaxation rate set at 5%, and then cooled to room temperature and wound to yield a 25-$\mu$m thick polyester film for cold forming.
On the obtained polyester film for cold forming, an aluminum foil (AA8079, thickness: 40 $\mu$m, manufactured by Sumikei Aluminum Foil Co., Ltd.) as a metal foil and an unstretched polypropylene film (GHC, thickness: 40 $\mu$m, manufactured by Mitsui Chemicals Tohcello, Inc.) as a sealant film were laminated in this order by dry lamination; the obtained laminate was subjected to an aging treatment in an atmosphere at 60°C for 72 hours to prepare a laminate film. As an adhesive, the TM-K55/CAT-10L (mixing ratio 100/10) manufactured by Toyo-Morton, Ltd. was used, and the application amount was set at 4.0 g/m$^2$.

Examples 2 to 23 and Comparative Examples 1 to 5

In each of Examples 2 to 23 and Comparative Examples 1 to 5, a polyester film for cold molding and a laminate film were obtained by performing operations in the same manner as in Example 1 except that the mixing proportions of polybutylene terephthalate (PBT) and polyethylene terephthalate (PET), the type (the copolymerization proportion of isophthalic acid) of polyethylene terephthalate (PET), the MD stretching magnification factor, the TD stretching magnification factor and the heat-fixing temperature were altered as shown in Table 1.

The properties of the polyester films and the laminate films obtained in Examples 1 to 23 and Comparative Examples 1 to 5 are shown in Table 1.

[Table 1]

| | | Constitution of polyester film | | | Production conditions | | | | | | Properties of polyester film | | | | | | | Properties of laminate film | |
|---|---|---|---|---|---|---|---|---|---|---|---|---|---|---|---|---|---|---|---|
| | | PBT | PET | | | Stretching MFs (MF=magnification factor) | | | | Heat-fixing temperature | Melting point (°C) | | Thermal shrinkage rate (%) | | Trans-esterification index | Resistance (acid resistance) | | | |
| | | Content | Proportion of IP copolymerization | Content | Stretching method | MD stretching MF | TD stretching MF | Area MF (MD×TD) | Stretching MF ratio (MD/TD) | | | | | | | Electrolyte | Hydrofluoric acid | Laminate strength | Form-ability |
| | | parts by mass | mol% | parts by mass | | | | | | °C | Tm1 | Tm2 | MD | TD | % | | | N/cm | |
| Examples | 1 | 60 | 0 | 40 | Successive | 3.39 | 3.84 | 13.0 | 0.88 | 167 | 221 | 253 | 13.0 | 10.0 | 3 | G | G | 3.0 | G |
| | 2 | 60 | 0 | 40 | Successive | 3.39 | 4.25 | 14.4 | 0.80 | 167 | 221 | 253 | 13.8 | 11.8 | 3 | G | G | 3.2 | E |
| | 3 | 60 | 0 | 40 | Successive | 3.39 | 4.45 | 15.1 | 0.76 | 167 | 221 | 253 | 14.2 | 11.9 | 3 | G | G | 3.3 | E |
| | 4 | 60 | 6 | 40 | Successive | 3.39 | 3.84 | 13.0 | 0.88 | 167 | 222 | 231 | 13.0 | 10.0 | 4 | G | G | 3.3 | E |
| | 5 | 60 | 6 | 40 | Successive | 3.39 | 4.25 | 14.4 | 0.80 | 167 | 222 | 231 | 13.8 | 11.8 | 4 | G | G | 3.2 | E |
| | 6 | 60 | 15 | 40 | Successive | 3.39 | 3.84 | 13.0 | 0.88 | 167 | 215*1 | | 13.0 | 10.0 | 7 | G | G | 4.0 | G |
| | 7 | 60 | 15 | 40 | Successive | 3.39 | 4.45 | 15.1 | 0.76 | 167 | 215*1 | | 14.2 | 11.9 | 7 | G | G | 3.8 | G |
| | 8 | 60 | 0 | 40 | Successive | 3.22 | 4.45 | 14.3 | 0.72 | 167 | 221 | 253 | 13.9 | 11.5 | 3 | G | G | 3.0 | G |
| | 9 | 60 | 0 | 40 | Successive | 2.88 | 4.45 | 13.0 | 0.64 | 167 | 221 | 253 | 13.0 | 11.5 | 3 | G | G | 3.4 | G |
| | 10 | 60 | 0 | 40 | Successive | 1.50 | 2.00 | 3.0 | 0.75 | 167 | 221 | 253 | 1.5 | 2.0 | 3 | G | G | 2.8 | A |
| | 11 | 60 | 0 | 40 | Successive | 2.00 | 3.00 | 6.0 | 0.67 | 167 | 221 | 253 | 6.0 | 7.5 | 3 | G | G | 3.0 | G |
| | 12 | 60 | 0 | 40 | Successive | 4.00 | 5.00 | 20.0 | 0.80 | 167 | 221 | 253 | 18.0 | 21.0 | 3 | G | G | 3.2 | G |
| | 13 | 60 | 0 | 40 | Successive | 4.00 | 5.50 | 22.0 | 0.73 | 167 | 221 | 253 | 21.0 | 23.0 | 3 | G | G | 3.3 | A |
| | 14 | 60 | 0 | 40 | Successive | 2.00 | 5.20 | 10.4 | 0.38 | 167 | 221 | 253 | 5.1 | 220.0 | 3 | G | G | 2.4 | A |
| | 15 | 60 | 0 | 40 | Successive | 2.00 | 5.00 | 10.0 | 0.40 | 167 | 221 | 253 | 6.0 | 23.0 | 3 | G | G | 3.0 | G |
| | 16 | 60 | 0 | 40 | Successive | 3.00 | 3.00 | 9.0 | 1.00 | 167 | 221 | 253 | 11.0 | 7.0 | 3 | G | G | 3.1 | G |
| | 17 | 60 | 0 | 40 | Successive | 4.00 | 3.00 | 12.0 | 1.33 | 167 | 221 | 253 | 20.5 | 13.0 | 3 | G | G | 2.6 | A |
| | 18 | 60 | 0 | 40 | Successive | 3.00 | 3.40 | 10.2 | 0.88 | 140 | 221 | 253 | 20.0 | 17.1 | 3 | G | G | 3.5 | A |
| | 19 | 60 | 0 | 40 | Successive | 3.39 | 3.84 | 13.0 | 0.88 | 155 | 221 | 253 | 17.0 | 14.0 | 3 | G | G | 3.5 | A |
| | 20 | 60 | 0 | 40 | Successive | 3.00 | 3.40 | 10.2 | 0.88 | 180 | 221 | 253 | 7.8 | 4.5 | 3 | G | G | 2.8 | A |
| | 21 | 60 | 0 | 40 | Successive | 3.00 | 3.30 | 9.9 | 0.91 | 190 | 221 | 253 | 4.3 | 0.5 | 3 | G | G | 2.3 | A |
| | 22 | 30 | 0 | 70 | Successive | 3.39 | 3.84 | 13.0 | 0.88 | 167 | 219 | 254 | 8.0 | 6.0 | 1 | G | G | 2.5 | G |
| | 23 | 80 | 0 | 20 | Successive | 3.39 | 3.84 | 13.0 | 0.88 | 167 | 222 | 251 | 15.0 | 12.0 | 0 | G | G | 3.8 | G |
| Comparative Examples | 1 | 90 | 0 | 10 | Successive | 3.00 | 3.30 | 9.9 | 0.91 | 167 | 223 | 250 | 4.8 | 4.0 | 0 | G | G | 3.2 | P |
| | 2 | 90 | 0 | 10 | Successive | 3.00 | 3.30 | 9.9 | 0.91 | 190 | 223 | 250 | 4.8 | 4.0 | 0 | G | G | 3.3 | P |
| | 3 | 20 | 0 | 80 | Successive | 3.00 | 3.30 | 9.9 | 0.91 | 167 | 218 | 254 | 2.5 | 0.5 | 0 | G | G | 2.4 | P |
| | 4 | 20 | 0 | 80 | Successive | 3.00 | 3.30 | 9.9 | 0.91 | 190 | 218 | 254 | 2.5 | 0.5 | 0 | G | G | 2.5 | P |
| | 5 | 0 | 0 | 100 | Successive | 3.00 | 3.30 | 9.9 | 0.91 | 247 | - | 255 | 1.1 | 0.0 | 0 | G | G | 3.1 | P |

*1: Peaks overlapped and only one melting point was observed.

Example 24

An unstretched film was obtained in the same manner as in Example 1.

Next, the edges of the unstretched film were gripped with the clips of a tenter-type simultaneous biaxial stretching machine, and the unstretched film was allowed to travel through the preliminary heating zone set at 60°C, and then simultaneously biaxially stretched at a temperature of 80°C with a magnification factor of 3.0 in MD and a magnification factor of 3.3 in TD. In the stretching, the area magnification factor (MD stretching magnification factor × TD stretching magnification factor) was 9.9, and the stretching magnification factor ratio (MD stretching magnification factor/TD stretching magnification factor) was 0.91.

Subsequently, the stretched film was heat treated for 4 seconds at a heat-fixing temperature set at 165°C and a TD relaxation rate set at 5%, and then cooled to room temperature and wound to yield a 25-μm thick polyester film for cold forming.

On the obtained polyester film for cold forming, a metal foil and a sealant film were laminated in the same manner as in Example 1 to prepare a laminate film.

Examples 25 to 29 and Comparative Examples 6 and 7

In each of Examples 25 to 29 and Comparative Examples 6 and 7, a polyester film for cold forming and a laminate film were obtained by performing operations in the same manner as in Example 24 except that the mixing proportions of polybutylene terephthalate (PBT) and polyethylene terephthalate (PET), the type of polyethylene terephthalate (PET) and the heat-fixing temperature were altered as shown in Table 2.

Example 30

A polyester film for cold forming and a laminate film were obtained by performing operations in the same manner as in Example 24 except that an unstretched film obtained by melting at 285°C and by setting the residence time at 15 minutes.

Comparative Example 8

A laminate film was prepared by performing operations in the same manner as in Example 1 except that a polyamide film stretched by an inflation method (Boniru RX, thickness: 25 μm, manufactured by Kohjin Co., Ltd.) was used in place of the polyester film.

The properties of the polyester films and the laminate films obtained in Examples 24 to 30 and Comparative Examples 6 to 8 are shown in Table 2.

[Table 2]

| | | Constitution of polyester film | | | Production conditions | | | | | | Properties of polyester film | | | | | | | Properties of laminate film | |
| | | PBT | PET | | | Stretching MFs (MF=magnification factor) | | | | Heat-fixing temperature | Melting point (°C) | | Thermal shrinkage rate (%) | | Trans-esterification index | Resistance (acid resistance) | | | |
| | | Content | Proportion of IP copolymerization | Content | Stretching method | MD stretching MF | TD stretching MF | Area MF (MD×TD) | Stretching MF ratio (MD/TD) | | | | | | | Electrolyte | Hydro-fluoric acid | Laminate strength | Form-ability |
| | | parts by mass | mol% | parts by mass | | | | | | °C | Tm1 | Tm2 | MD | TD | % | | | N/cm | |
| Examples | 24 | 60 | 0 | 40 | Simultaneous | 3.0 | 3.3 | 9.9 | 0.91 | 165 | 221 | 253 | 17.0 | 14.0 | 3 | G | G | 3.0 | G |
| | 25 | 50 | 6 | 50 | Simultaneous | 3.0 | 3.3 | 9.9 | 0.91 | 165 | 222 | 231 | 15.0 | 11.0 | 4 | G | G | 3.3 | G |
| | 26 | 50 | 15 | 50 | Simultaneous | 3.0 | 3.3 | 9.9 | 0.91 | 165 | 216*1 | | 13.0 | 9.0 | 7 | G | G | 4.2 | G |
| | 27 | 60 | 0 | 40 | Simultaneous | 3.0 | 3.3 | 9.9 | 0.91 | 140 | 221 | 253 | 21.0 | 18.0 | 3 | G | G | 3.5 | G |
| | 28 | 60 | 0 | 40 | Simultaneous | 3.0 | 3.3 | 9.9 | 0.91 | 180 | 221 | 253 | 6.7 | 4.2 | 3 | G | G | 2.1 | G |
| | 29 | 60 | 0 | 40 | Simultaneous | 3.0 | 3.3 | 9.9 | 0.91 | 200 | 221 | 253 | 3.0 | 1.2 | 3 | G | G | 1.5 | G |
| | 30 | 60 | 0 | 40 | Simultaneous | 3.0 | 3.3 | 9.9 | 0.91 | 165 | 221 | 253 | 17.0 | 14.0 | 13 | G | G | 2.7 | G |
| Comparative Examples | 6 | 85 | 0 | 15 | Simultaneous | 3.0 | 3.3 | 9.9 | 0.91 | 165 | 223 | 250 | 13.0 | 8.0 | 0 | G | G | 2.3 | P |
| | 7 | 25 | 0 | 75 | Simultaneous | 3.0 | 3.3 | 9.9 | 0.91 | 165 | 218 | 254 | 19.0 | 16.0 | 0 | G | G | 1.9 | P |
| | 8 | Polyamide | | | - | - | - | - | - | 210 | 219 | | 1.4 | 0.8 | - | P | P | 4.0 | G |

*1: Peaks overlapped and only one melting point was observed.

In Examples 1 to 30, there were obtained results that the obtained polyester films were excellent in acid resistance and electrolyte resistance, and the obtained laminate films were excellent in formability. Among these Examples, in Examples 2, 3, 5 and 7, the polyester films had stretching magnification factors falling in particularly preferable ranges and hence were particularly excellent in orientation balance; in Examples 4 and 6, the polyethylene terephthalates included isophthalic acid as the acid component, hence the polyester films were suppressed in crystallization and improved in the formability, and in each of Examples 2 to 7, there was obtained a laminate film excellent in formability and satisfactory in the exterior appearance after forming.

In each of Examples 10 and 13, the area magnification factor of the polyester film fell outside the preferable range; in each of Examples 14 and 17, the stretching magnification factor of the polyester film fell outside the preferable range, hence the polyester film was poor in the orientation balance, and underwent stress concentration; in each of Examples 18 and 19, the heat-fixing temperature was set to be slightly low in order to suppress the crystallization of the film so as to enhance the formability, and consequently the residual stress in the film became high; in each of Examples 20 and 21, the heat-fixing temperature was set to be slightly high in order to reduce the residual stress in the film, and consequently the crystallization of the film proceeded, and in each of Examples 10,13,14, and 17 to 21, the laminate film after forming underwent the occurrence of cracks not penetrating through the aluminum foil but did not undergo the occurrence of delamination; these results were of the levels practically causing no problems.

In each of Comparative Examples 1 and 6, the content of polybutylene terephthalate (PBT) in the polyester film was large, and the property of polybutylene terephthalate (PBT) being high in crystallinity remarkably developed; and consequently the obtained laminate film was not excellent in formability. In Comparative Example 2, the heat-fixing temperature was high, the crystallization of the polyester film was allowed to proceed, the stress of the film at the time of forming became high, and additionally the content of polybutylene terephthalate (PBT) was large, and the property of polybutylene terephthalate (PBT) being high in crystallinity remarkably developed; and consequently the obtained laminate film underwent the breakage of the aluminum foil and was not excellent in formability.

In each of Comparative Examples 3 to 5 and 7, the content of polybutylene terephthalate (PBT) in the polyester film was small, and the film stress at the time of forming was high; in each of Comparative Examples 4 and 5, the heat-fixing temperature was high, the crystallization of the polyester film was allowed to proceed, and the obtained laminate film underwent the breakage of the aluminum foil, and was not excellent in formability.

In Comparative Example 8, a laminate film having excellent formability was obtained, but the polyamide film constituting the laminate film had neither acid resistance nor electrolyte resistance.

**Claims**

1. A polyester film for cold forming comprising polybutylene terephthalate (PBT) and polyethylene terephthalate (PET), wherein a mass ratio (PBT/PET) between PBT and PET is 30/70 to 80/20.

2. The polyester film for cold forming according to claim 1, wherein after a heat treatment at 160°C for 15 minutes, a thermal shrinkage rate in a lengthwise direction (MD) and a thermal shrinkage rate in a widthwise direction (TD) are each 5 to 20%.

3. The polyester film for cold forming according to claim 1, wherein polyethylene terephthalate (PET) comprises isophthalic acid as an acid component in a content of 0 to 15 mol%.

4. The polyester film for cold forming according to claim 1, wherein a transesterification index between polybutylene terephthalate (PBT) and polyethylene terephthalate (PET) is 1 to 10%.

5. A method for producing the polyester film for cold forming according to any one of claims 1 to 4, wherein the polyester film is stretched in a lengthwise direction (MD) and a widthwise direction (TD), an area magnification factor (MD stretching magnification factor × TD stretching magnification factor) is set at 6 to 20, and a stretching magnification factor ratio (MD stretching magnification factor/TD stretching magnification factor) is set at 0.4 to 1.

6. The method for producing the polyester film for cold forming, according to claim 5, wherein the polyester film is stretched with the MD stretching magnification factor set at 2 to 4 and the TD stretching magnification factor set at 3 to 5.

7. A laminate film wherein on the polyester film for cold forming according to any one of claims 1 to 4, a metal foil and a sealant film are laminated in this order.

## FIG. 1

## INTERNATIONAL SEARCH REPORT

| International application No. |
| --- |
| PCT/JP2013/069848 |

A.  CLASSIFICATION OF SUBJECT MATTER
*C08J5/18*(2006.01)i, *B32B15/09*(2006.01)i, *C08L67/02*(2006.01)i

According to International Patent Classification (IPC) or to both national classification and IPC

B.  FIELDS SEARCHED

Minimum documentation searched (classification system followed by classification symbols)
C08J5/18, B32B15/09, C08L67/02

Documentation searched other than minimum documentation to the extent that such documents are included in the fields searched
Jitsuyo Shinan Koho          1922-1996   Jitsuyo Shinan Toroku Koho   1996-2013
Kokai Jitsuyo Shinan Koho     1971-2013   Toroku Jitsuyo Shinan Koho   1994-2013

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X<br>Y | JP 2003-2987 A   (Unitika Ltd.),<br>08 January 2003 (08.01.2003),<br>claims; paragraphs [0009], [0017], [0024],<br>[0027]<br>(Family: none) | 1,3-6<br>7 |
| X<br>Y | JP 2008-143184 A  (Toyobo Co., Ltd.),<br>26 June 2008 (26.06.2008),<br>claims; paragraphs [0051], [0064], [0067],<br>[0068], [0069], [0070], [0073]<br>& JP 2002-173541 A      & US 2002/0102419 A1<br>& US 2005/0053796 A1    & EP 1186633 A2 | 1,3-6<br>7 |

☒   Further documents are listed in the continuation of Box C.     ☐   See patent family annex.

| * | Special categories of cited documents: |
| --- | --- |
| "A" | document defining the general state of the art which is not considered    to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 28 August, 2013 (28.08.13) | 10 September, 2013 (10.09.13) |

| Name and mailing address of the ISA/<br>    Japanese Patent Office | Authorized officer |
| --- | --- |
| Facsimile No. | Telephone No. |

Form PCT/ISA/210 (second sheet) (July 2009)

13

**INTERNATIONAL SEARCH REPORT**

International application No.

PCT/JP2013/069848

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 2004-148627 A (Teijin DuPont Films Japan Ltd.),<br>27 May 2004 (27.05.2004),<br>claims; paragraphs [0057], [0058], [0060], [0061], [0069] to [0072]<br>(Family: none) | 1,3,5,6<br>7 |
| X<br>Y | JP 2009-279902 A (Daiwa Can Co.),<br>03 December 2009 (03.12.2009),<br>claims; paragraphs [0011], [0018], [0024], [0025], [0026], [0029], [0030], [0058]<br>(Family: none) | 1-3<br>7 |
| X<br>Y | JP 2004-9599 A (Toray Industries, Inc.),<br>15 January 2004 (15.01.2004),<br>claims; paragraphs [0014], [0017], [0027], [0029], [0030], [0046], [0047], [0051], [0052], [0053], [0060], [0061], [0062], [0065]<br>(Family: none) | 1-6<br>7 |
| Y | WO 2012/086741 A1 (Kohjin Co., Ltd.),<br>28 June 2012 (28.06.2012),<br>claims; examples<br>& JP 2012-146636 A     & TW 201240797 A | 7 |
| P,X | JP 2012-172091 A (Kohjin Co., Ltd.),<br>10 September 2012 (10.09.2012),<br>claims; paragraphs [0026], [0029], [0037], [0044], [0045], [0046]<br>(Family: none) | 1,3,5-7 |
| A | JP 2012-54221 A (Gunze Ltd., Gunze Kobunshi Corp.),<br>15 March 2012 (15.03.2012),<br>claims; examples<br>(Family: none) | 1-7 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000123800 A

- JP 2005022336 A